# EUROPÄISCHE PATENTSCHRIFT

(11) **EP 2 837 053 B1**
(45) Veröffentlichungstag und Bekanntmachung des Hinweises auf die Patenterteilung: **14.09.2016**
(21) Anmeldenummer: 13715244.3
(22) Anmeldetag: 12.04.2013
(51) Int. Cl.: H01M 8/06, H01M 4/86, H01M 4/90, H01M 8/12

(54) **SCHWEFELTOLERANTES HOCHTEMPERATUR-BRENNSTOFFZELLENSYSTEM MIT INTERNEM WASSERGAS-SHIFT-KATALYSATOR**
SULFUR TOLERANT HIGH TEMPERATURE FUEL CELL SYSTEM COMPRISING INTERNAL WATER GAS SHIFT CATALYST
SYSTÈME DE PILES À COMBUSTIBLE À HAUTE TEMPÉRATURE ÉTANT INTERTE AU SOUFRE COMPRENANT UN CATALYSEUR WATER GAS SHIFT

(30) Priorität: 13.04.2012 DE 102012103189
(43) Veröffentlichungstag der Anmeldung: 18.02.2015
(73) Patentinhaber: ElringKlinger AG, 72581 Dettingen (DE); CeramTec GmbH, 73207 Plochingen (DE)
(72) Erfinder: KIEFER, Thomas, 76337 Waldbronn (DE); HOFFMANN, Marco, 72768 Reutlingen (DE); WEBER, André, 76131 Karlsruhe (DE); KLUGE, Claus-Peter, 95195 Röslau (DE)
(74) Vertreter: Hoeger, Stellrecht & Partner Patentanwälte mbB
(86) Internationale Anmeldenummer: PCT/EP2013/057686
(87) Internationale Veröffentlichungsnummer: WO 2013/153198

(56) Entgegenhaltungen:
- WO-A1-2006/046033
- DE-A1-102008 024 674
- US-A1- 2004 045 819
- US-A1- 2010 136 376
- US-A1- 2010 304 240

## Beschreibung

Die vorliegende Erfindung betrifft ein Brennstoffzellensystem, umfassend einen Brennstoffzellenstapel mit einer Mehrzahl von Kathoden und Anoden, dem kathodenseitig ein Sauerstoff enthaltendes Oxidatorgas und anodenseitig ein Brenngas zuführbar ist, und einen Reformer zur Erzeugung des Brenngases aus einem Brennstoff.

Die Erfindung betrifft ferner die Verwendung eines derartigen Brennstoffzellensystems zur Erzeugung von elektrischer Energie in einem Kraftfahrzeug, das einen mit dem Brennstoff betriebenen Verbrennungsmotor umfasst.

Um mittels einer Brennstoffzelle elektrische Energie aus einem Brennstoff gewinnen zu können, wie er insbesondere zum Betrieb von Kraftfahrzeugen eingesetzt wird (z.B. Dieselkraftstoff oder Motorbenzin), muss aus dem Brennstoff zunächst ein Brenngas mit elektrochemisch umsetzbaren Bestandteilen erzeugt werden. Dies erfolgt bei dem Brennstoffzellensystem der eingangs genannten Art durch den Reformer, in dem z.B. durch eine partielle Oxidation oder Dampfreformierung des Brennstoffes ein auch als Synthesegas bezeichnetes Gasgemisch entsteht, das u.a. Wasserstoff und Kohlenmonoxid enthält. Weitere Komponenten eines derartigen Brennstoffzellensystems sind typischerweise ein Restgasbrenner, in dem das im Brennstoffzellenstapel nicht umgesetzte Brenngas nachverbrannt wird. Die hierbei entstehende Wärme wird ausgenutzt, um mittels eines Schichtwärmeüberträgers das Oxidatorgas (in der Regel Umgebungsluft) vorzuwärmen, bevor es dem Brennstoffzellenstapel kathodenseitig zugeführt wird.

Bei den Brennstoffzellenstapeln, die in solchen Systemen eingesetzt werden, handelt es sich normalerweise um Hochtemperaturbrennstoffzellen, insbesondere um Festoxidbrennstoffzellen (SOFC, Solid Oxide Fuel Cell). Als Elektrolyt dient hierbei ein oxidkeramisches Material, das oberhalb einer bestimmten Temperatur eine Leitfähigkeit für Sauerstoffionen aufweist, insbesondere Yttrium-stabilisiertes Zirkoniumdioxid (YSZ). Bei der Verstromung von Wasserstoff und Kohlenmonoxid, die in dem von dem Reformer erzeugten Brenngas enthalten sind, laufen dabei folgende Anodenreaktionen ab:

H₂ + O²⁻ → H₂O + 2 e⁻ (1)

CO + O²- → CO₂ + 2 e⁻ (2)

Die entsprechende Kathodenreaktion lautet:

½ O₂ + 2 e⁻ → O²⁻ (3)

In der Praxis hat sich gezeigt, dass die Effizienz von Brennstoffzellensystemen der eingangs genannten Art durch den Schwefelgehalt von herkömmlichen Brennstoffen, insbesondere von Dieselkraftstoff, wesentlich beeinträchtigt wird. Selbst handelsüblicher Dieselkraftstoff, der unter der Bezeichnung "schwefelfrei" vertrieben wird, weist typischerweise einen Schwefelgehalt von bis zu 10 ppm auf, der zwar bei einem Betrieb des Brennstoffzellenstapels oberhalb von etwa 900 °C tolerierbar ist, jedoch bei einer niedrigeren Betriebstemperatur von weniger als 800 °C, die aufgrund von allgemeinen Wirkungsgradbetrachtungen bevorzugt ist, zu erheblichen Leistungseinbußen führt. So wurde bei Untersuchungen der Erfinder festgestellt, dass beim Betrieb einer Festoxidbrennstoffzelle bei 750 °C mit einem Brenngas, welches durch Reformierung von normalem Dieselkraftstoff mit einem Schwefelgehalt von 9 ppm erzeugt wurde, die Leistung des Brennstoffzellenstapels innerhalb von vier Stunden um mehr als 30% abnimmt. Der hiermit verbundene Wirkungsgradverlust stellt die Wirtschaftlichkeit der Verwendung solcher Brennstoffzellensysteme z.B. in Kraftfahrzeugen in Frage.

Eine Entschwefelung des Brenngases innerhalb des Brennstoffzellensystems ist zwar grundsätzlich möglich, jedoch aufgrund des damit verbundenen konstruktiven Aufwandes, Wartungsbedarfs und/oder Energiebedarfs (z.B. bei einer Heißgasentschwefelung) insbesondere bei Kraftfahrzeugen ebenfalls nicht wirtschaftlich durchzuführen.

Es ist die Aufgabe der vorliegenden Erfindung, ein Brennstoffzellensystem vorzuschlagen, bei dem ein Leistungsverlust bei Temperaturen unterhalb von 800 °C, der durch Schwefel im Brennstoff bzw. Brenngas bedingt ist, vermieden oder zumindest deutlich verringert werden kann.

Diese Aufgabe wird bei dem Brennstoffzellensystem der eingangs genannten Art erfindungsgemäß dadurch gelöst, dass der Brennstoffzellenstapel ein katalytisch aktives Material umfasst, welches in den anodenseitigen Bereichen jeweils so angeordnet ist, dass es von dem Brenngas stromaufwärts der Anode durchströmbar ist, wobei das katalytisch aktive Material die Reaktion von Kohlenmonoxid und Wasser zu Kohlendioxid und Wasserstoff katalysiert.

Auch wenn der exakte Mechanismus, der für den durch Schwefel bedingten Leistungsabfall verantwortlich ist, noch nicht bekannt ist, wird allgemein davon ausgegangen, dass durch bestimmte schwefelhaltige Verbindungen die katalytische Aktivität des Anodenmaterials hinsichtlich der an der Anode ablaufenden Reaktionen (insbesondere die obigen Reaktionen 1 und 2) beeinträchtigt wird. Genauere Untersuchungen haben jedoch ergeben, dass diese Schwefelvergiftung zu einem ganz überwiegenden Anteil nur die Verstromung von Kohlenmonoxid betrifft (Reaktion 2), d.h. das Kohlenmonoxid des Brenngases passiert den Brennstoffzellenstapel größtenteils ungenutzt und wird im Restgasbrenner verbrannt, während die Verstromung von Wasserstoff (Reaktion 2) weiterhin mehr oder weniger ungehindert abläuft.

Die erfindungsgemäß vorgeschlagene Lösung macht sich diese Erkenntnis zunutze, indem durch das zusätzliche katalytisch aktive Material in den anodenseitigen Bereichen des Brennstoffzellenstapels die Umsetzung von Kohlenmonoxid, welches bei einer Schwefelvergiftung nicht mehr effektiv verstromt werden kann, zu Wasserstoff katalysiert wird:

CO + H₂O → CO₂ + H₂ (4)

Diese Umsetzung wird auch als Shift-Reaktion bezeichnet. Sie ist grundsätzlich reversibel, wobei die Bildung von Kohlendioxid und Wasserstoff durch eine kontinuierliche Zufuhr von Wasser begünstigt wird. Dieses Wasser wird in den anodischen Bereichen des Brennstoffzellenstapels gemäß der Anodenreaktion des Wasserstoffs (Reaktion 1) gebildet. Ohne das erfindungsgemäß vorgesehene katalytisch aktive Material ist die Reaktionsgeschwindigkeit allerdings zu gering.

Prinzipiell wird die Reaktion 4, ebenso wie die Reaktion 2, auch durch das Anodenmaterial selbst katalysiert, welches bei Hochtemperaturbrennstoffzellen in der Regel Nickeloxid als Katalysator enthält. Allerdings kommt es gerade bei Nickelkatalysatoren hinsichtlich der Shift-Reaktion ebenfalls zu einem deutlich Aktivitätsverlust durch Schwefel, während dies bei dem katalytisch aktiven Material gemäß der vorliegenden Erfindung nicht oder nur in geringerem Ausmaß der Fall ist.

Gemäß der Bruttoreaktion aus den Reaktionen 1 und 4 ermöglicht das erfindungsgemäße Brennstoffzellensystem somit indirekt die Verstromung des im Brenngas enthaltenen Kohlenmonoxids auch bei einer Schwefelvergiftung der katalytischen Aktivität des Anodenmaterials.

Die Erfindung sieht weiterhin vor, dass das katalytisch aktive Material so angeordnet ist, dass es von dem Brenngas stromaufwärts der Anode durchströmt wird. Das katalytisch aktive Material wird also nicht unmittelbar in die Anode eingebracht, was insofern vorteilhaft ist, als dadurch eine möglicherweise nicht vorhersehbare Beeinflussung der katalytischen Aktivität der Anode selbst vermieden wird. Dadurch, dass das zusätzliche katalytisch aktive Material unabhängig von der Anode (aber in deren unmittelbarer Nähe) vorgesehen ist, sind auch keine Änderungen an den etablierten Herstellungsprozessen für die Anode erforderlich, zumal die Anode typischerweise als integraler Bestandteil einer Kathoden-Elektrolyt-Anoden-Einheit hergestellt wird.

Indem das katalytisch aktive Material stromaufwärts der Anode von dem Brenngas durchströmt wird, gelangt ein Brenngas mit einer veränderten Zusammensetzung zur Anode, welches einen möglichst geringen Anteil an Kohlenmonoxid und einen möglichst hohen Anteil an Wasserstoff umfasst.

Bei einer bevorzugten Ausführungsform der Erfindung ist das katalytisch aktive Material zwischen der Anode und einem anodenseitigen Kontaktelement angeordnet. Das anodenseitige Kontaktelement dient der elektrischen Kontaktierung der Anode und ermöglicht einen gleichmäßig über die Anodenfläche verteilten Stromfluss. Die Anordnung des katalytisch aktiven Materials zwischen der Anode und dem anodenseitigen Kontaktelement stellt eine konstruktiv sehr einfache Lösung dar, die weder eine Änderung der Anode noch des Kontaktelements erfordert.

Das anodenseitige Kontaktelement umfasst bevorzugt ein Netz, Geflecht oder Gewebe aus Nickel oder einer nickelhaltigen Legierung. Nickelnetze werden typischerweise als Kontaktelemente bei Festoxidbrennstoffzellen eingesetzt.

Besonders günstig ist es, wenn das zwischen der Anode und dem Kontaktelement angeordnete katalytisch aktive Material in Form einer keramischen Paste vorliegt. Eine solche Paste kann Unebenheiten der Oberflächenstrukturen der Anode und des Kontaktelements ausgleichen und begünstigt somit einen möglichst engen und großflächigen Kontakt zwischen diesen beiden Elementen.

Bei einer weiteren bevorzugten Ausführungsform der Erfindung bildet das katalytisch aktive Material selbst das anodenseitige Kontaktelement oder eine Beschichtung auf dem anodenseitigen Kontaktelement. In diesem Fall erfüllt da Kontaktelement zwei Funktionen gleichzeitig, nämlich die elektrische Kontaktierung der Anode sowie die Katalyse der Umsetzung von Kohlenmonoxid und Wasser zu Kohlendioxid und Wasserstoff im Brenngas.

Bei einer Variante der Erfindung bildet das katalytisch aktive Material einen porösen keramischen Festkörper als anodenseitiges Kontaktelement. Ein derartiges Kontaktelement aus dem katalytisch aktiven Material kann durch geeignete Herstellungsverfahren z.B. stoffschlüssig mit der Anode verbunden werden, d.h. als weitere Schicht auf die Kathoden-Elektrolyt-Anoden-Einheit aufgebracht werden.

Wenn das katalytisch aktive Material eine Beschichtung auf dem anodenseitigen Kontaktelement bildet, dann kann diese Beschichtung mittels eines nasschemischen Verfahrens (z.B. Tauchen, Drucken oder Nasspulverspritzen), CVD, PVD oder galvanisch auf das anodenseitige Kontaktelement aufgebracht werden. Das Kontaktelement selbst kann in diesem Fall wiederum aus Nickel oder einer nickelhaltigen Legierung gebildet sein, wie oben beschrieben, oder aus einem anderen geeigneten Material.

Das katalytisch aktive Material gemäß der vorliegenden Erfindung kann als den eigentlichen Katalysator prinzipiell jedes Element oder jede Verbindung umfassen, welche(s) die Shift-Reaktion auch bei Anwesenheit von Schwefel im Brenngas katalysiert. Das katalytisch aktive Material umfasst insbesondere ein oder mehrere Metalle der Gruppen 8 bis 12, der Lanthanoiden und/oder deren Verbindungen, insbesondere deren Oxide, dessen katalytische Aktivität für die Reaktion von Kohlenmonoxid und Wasser zu Kohlendioxid und Wasserstoff durch die Anwesenheit von Schwefel im Brenngas nicht oder nur in geringerem Ausmaß verringert wird als die katalytische Aktivität der Anode für diese Reaktion. Das Anodenmaterial von Hochtemperaturbrennstoffzellen enthält als Katalysator in der Regel Nickeloxid, dessen katalytische Aktivität für die Shift-Reaktion (ebenso wie für die elektrochemische Umsetzung von Kohlenmonoxid) durch Schwefel stark beeinträchtigt wird.

Bei bevorzugten Ausführungsformen der Erfindung umfasst das katalytisch aktive Material Cer, Platin, Palladium, Rhodium, Ruthenium, Eisen, Cobalt, Kupfer, Silber, Gold und/oder Zinn, und/oder deren Oxide. Als besonders bevorzugten Katalysator umfasst das katalytisch aktive Material Cer und/oder Cerdioxid (CeO₂), welches dotiert sein kann, insbesondere mit Gadolinium, Yttrium, Zirkonium und/oder Calcium. Es hat sich gezeigt, dass diese Metalle bzw. Oxide auch bei Anwesenheit von Schwefel im Brenngas eine deutliche Aktivität für die Katalyse der Shift-Reaktion behalten.

Das katalytisch aktive Material kann in diesem Fall entweder einphasig sein (z.B. metallisches Cer, eine Cer-Legierung oder dotiertes Cerdioxid) oder auch als mehrphasiges System vorliegen, bei dem mindestens eine Phase Cer enthält (z.B. ein Cermet, bei dem metallisches Cer und Cerdioxid nebeneinander vorliegen).

Das katalytisch aktive Material gemäß der vorliegenden Erfindung kann ausschließlich aus dem oder den vorstehend genannten Metallen und/oder Verbindungen gebildet sein, insbesondere wenn es als Beschichtung auf dem anodischen Kontaktelement eingesetzt wird. Insbesondere wenn das katalytisch aktive Material eine keramische Paste oder einen porösen keramischen Festkörper bildet, ist es jedoch bevorzugt, wenn es neben dem eigentlichen Katalysator ferner ein oder mehrere Trägermaterialien umfasst. Solche Trägermaterialien ermöglichen es, die neben der katalytischen Aktivität erforderlichen Eigenschaften des Materials zu erhalten und zu optimieren, d.h. insbesondere die mechanische Festigkeit, Porosität, Konsistenz (im Fall einer Paste) und elektrisch Leitfähigkeit. In erster Linie führt das Trägermaterial aber auch zu einer gleichmäßigen Verteilung des Katalysators über eine möglichst große Oberfläche und verhindert Agglomerationen.

Bevorzugte Trägermaterialien im Rahmen der vorliegenden Erfindung umfassen Zirkoniumdioxid, Yttrium-stabilisiertes Zirkoniumdioxid, Nickeloxid, Titandioxid, Aluminiumoxid, Magnesiumoxid, Zeolithe, Hexaaluminate und Perowskite, welche dotiert sein können. Besonders günstig ist die Verwendung von Yttrium-stabilisiertem Zirkoniumdioxid und Nickeloxid als Trägermaterialien, da dies im Wesentlichen auch der typischen Zusammensetzung des Anodenmaterials entspricht und somit eine weitgehende Materialhomogenität zwischen der Anode und dem anströmseitig angeordneten katalytischen aktiven Material erreicht werden kann. Hierbei gewährleistet das Nickeloxid ab einem bestimmten Anteil die elektrische Leitfähigkeit des Trägermaterials.

Der Anteil des eigentlichen Katalysators in dem katalytischen aktiven Material kann über einen weiten Bereich variiert werden, wobei der optimale Anteil sowohl von der Form des katalytisch aktiven Materials (Festkörper, Paste oder Beschichtung) als auch von den vorgesehenen Betriebsbedingungen des Brennstoffzellensystems abhängt. So kann das katalytisch aktive Material, wie bereits oben angesprochen, einerseits vollständig aus dem eigentlichen Katalysator gebildet sein, während in anderen Fällen bereits sehr geringe Mengen im Bereich von etwa 0,1 Gew.% ausreichend sind.

In vielen Fällen ist es bevorzugt, wenn das oder die Metalle der Gruppen 8 bis 12 und der Lanthanoiden und/oder deren Verbindungen mit einem Anteil von 1 bis 15 Gew.%, insbesondere von 4 bis 10 Gew.%, in dem katalytisch aktiven Material enthalten sind. Beispielsweise kann ein katalytisch aktives Material in Form einer keramischen Paste 4 bis 10 Gew.% Cerdioxid und als Trägermaterial 90 bis 96 Gew.% Yttrium-stabilisiertes Zirkoniumdioxid und Nickeloxid im Verhältnis von etwa 3:5 umfassen.

Als besonders vorteilhaft hat sich auch der Einsatz einer Mischung aus Cerdioxid (z.B. mit Gadolinium dotiert) und Nickeloxid im Rahmen der vorliegenden Erfindung erwiesen, bevorzugt im Verhältnis von etwa 1:1. Es hat sich gezeigt, dass ein solches Material im Vergleich zu reinem dotiertem Cerdioxid eine höhere katalytische Aktivität in Bezug auf die Shiftreaktion aufweist und zu einer um etwa 25% verbesserten Leistungsfähigkeit der Brennstoffzelle führt. Dies ist insofern überraschend, als Nickeloxid selbst, wenn es als Anodenmaterial eingesetzt wird, normalerweise einen Aktivitätsverlust durch Schwefel erleidet (siehe oben). Die genaue Wirkungsweise solcher Mischungen aus Cerdioxid und Nickeloxid, in denen möglicherweise auch ein entsprechendes Mischoxid vorliegt, ist noch nicht abschließend geklärt, es wird jedoch davon ausgegangen, dass das Vorliegen von 3-Phasen-Grenzen (Cerdioxid/Nickeloxid/Brenngas) eine Rolle spielt.

Das katalytisch aktive Material kann, insbesondere wenn es in Form einer Paste oder Beschichtung vorliegt, weitere Zusätze zur Einstellung der erforderlichen Eigenschaften enthalten, insbesondere organische Bindemittel und/oder Lösungsmittel.

In dem Reformer des erfindungsgemäßen Brennstoffzellensystems läuft vorzugsweise eine Dampfreformierung, autotherme Reformierung oder partielle Oxidation ab, bei der ein Wasserstoff und Kohlenmonoxid enthaltendes Brenngas aus dem Brennstoff erzeugt wird. Wasserstoff und Kohlenmonoxid liegen in dem Brenngas in der Regel in etwa gleichen Anteilen vor (typischerweise im Bereich von jeweils ca. 15%). Daneben enthält das Brenngas Kohlendioxid, Wasser und Restkohlenwasserstoffe.

Der Brennstoff im Rahmen der vorliegenden Erfindung umfasst ein Gemisch von aliphatischen und/oder aromatischen Kohlenwasserstoffen, wobei der Brennstoff insbesondere ausgewählt ist aus Dieselkraftstoff und Motorbenzin.

Der Brennstoff weist typischerweise einen Schwefelgehalt von bis zu 15 ppm auf, insbesondere von bis zu 10 ppm.

Gegenstand der vorliegenden Erfindung ist insbesondere auch die Verwendung des vorstehend beschriebenen Brennstoffzellensystems zur Erzeugung von elektrischer Energie in einem Kraftfahrzeug, das einen mit dem Brennstoff betriebenen Verbrennungsmotor umfasst. Besonders vorteilhaft ist die Verwendung des Brennstoffzellensystems als APU (Auxiliary Power Unit) in einem mit Dieselkraftstoff betriebenen Lastkraftwagen.

Diese und weitere Vorteile der Erfindung werden anhand der nachfolgenden Ausführungsbeispiele unter Bezugnahme auf die Figuren näher erläutert. Es zeigen im Einzelnen:
- Figur 1:: eine schematische Darstellung eines Ausführungsbeispiels des erfindungsgemäßen Brennstoffzellensystems; und
- Figur 2:: einen schematischen Querschnitt durch eine einzelne Brennstoffzelle gemäß einem Ausführungsbeispiel der Erfindung.

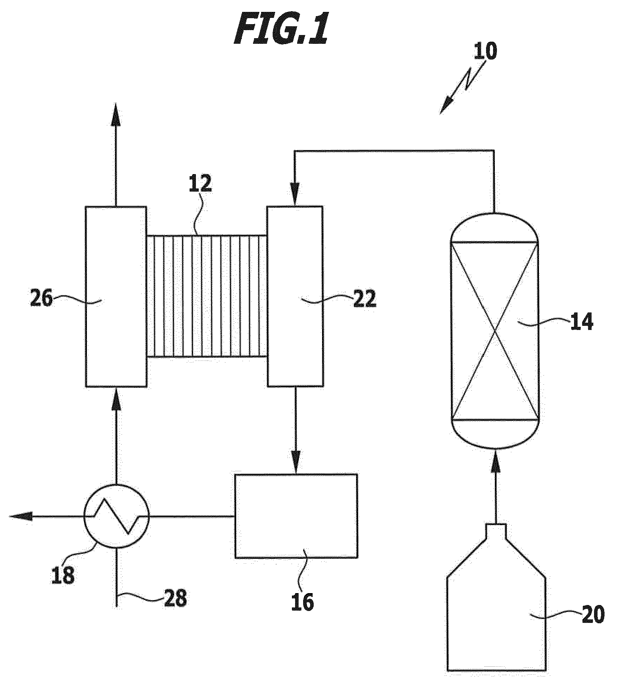

Die Figur 1 zeigt schematisch ein Brennstoffzellensystem gemäß einem Ausführungsbeispiel der Erfindung, welches als Ganzes mit 10 bezeichnet ist. Das Brennstoffzellensystem 10 umfasst einen Brennstoffzellenstapel 12 mit einer Mehrzahl von Kathoden und Anoden, einen Reformer 14, einen Restgasbrenner 16 und einen Schichtwärmeüberträger 18.

Beim Betrieb des Brennstoffzellensystems 10 wird Brennstoff (z.B. Dieselkraftstoff) aus einem Brennstofftank 20 dem Reformer 14 (z.B. einem Dampfreformer) zugeführt, wo aus dem Brennstoff ein Wasserstoff und Kohlemonoxid enthaltendes Brenngas erzeugt wird. Das Brenngas wird der Anodenseite 22 des Brennstoffzellenstapels 12 zugeführt. Durch ein katalytisch aktives Material, welches in den anodenseitigen Bereichen des Brennstoffzellenstapels 12 jeweils stromaufwärts der Anoden angeordnet ist (in der Figur 1 nicht dargestellt), wird die vollständige oder teilweise Umsetzung des in dem Brenngas enthaltenen Kohlenmonoxids mit Wasser zu Kohlendioxid und Wasserstoff katalysiert. Der Wasserstoff wird an den Anoden des Brennstoffzellenstapels 12 elektrochemisch umgesetzt. Nicht umgesetztes Brenngas, welches im Anodenabgas enthalten ist, wird in dem Restgasbrenner 16 nachverbrannt.

Der Kathodenseite 26 des Brennstoffzellenstapels 12 wird Umgebungsluft 28 als Oxidatorgas zugeführt, wobei die Umgebungsluft 28 zuvor durch die Abwärme des Restgasbrenners 26 mittels des Schichtwärmeüberträgers 18 vorgewärmt wird.

Durch die Umsetzung von Kohlenmonoxid und Wasser zu Kohlendioxid und Wasserstoff mit Hilfe des katalytisch aktiven Materials ist bei dem Brennstoffzellensystem 10 eine direkte elektrochemische Umsetzung von Kohlenmonoxid, welche durch schwefelhaltige Verbindungen im Brenngas stark beeinträchtigt wird, nicht erforderlich. Dadurch kann das Brennstoffzellensystem 10 auch mit einem Brennstoff mit einem Schwefelgehalt von z.B. bis zu 10 ppm mit einer hohen Leistungseffizient betrieben werden, und zwar auch bei Temperaturen unterhalb von 800 °C.

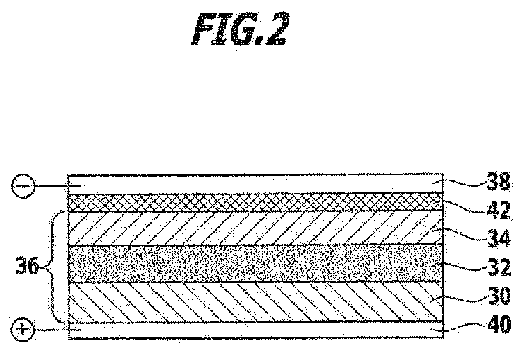

Die Figur 2 zeigt einen schematischen Querschnitt durch eine einzelne elektrochemische Zelle des Brennstoffstapels gemäß einem Ausführungsbeispiel der Erfindung, bei der eine Kathode 30, ein Elektrolyt 32 und eine Anode 34 schichtweise angeordnet sind und eine Kathoden-Elektrolyt-Anoden-Einheit 36 bilden. Auf Seiten der Kathode 30 ist ein kathodenseitiges Kontaktelement 38 und auf Seiten der Anode 34 eine anodenseitiges Kontaktelement 40 angeordnet, welche der elektrischen Kontaktierung der jeweiligen Elektrode dienen.

Zwischen der Anode 34 und dem anodischen Kontaktelement 38 ist ein katalytisch aktives Material 42 angeordnet, d.h. beim Betrieb des Brennstoffzellensystems wird das katalytisch aktive Material 42 stromaufwärts der Anode 34 von dem Brenngas durchströmt. Dabei begünstigt das katalytisch aktive Material 42 die Reaktion von Kohlenmonoxid mit Wasser zu Kohlendioxid und Wasserstoff.

Bei dem in der Figur 2 gezeigten Ausführungsbeispiel liegt das katalytisch aktive Material 42 in Form einer keramischen Paste vor, die einen direkten und großflächigen Kontakt sowohl mit der Anode 34 als auch mit dem anodenseitigen Kontaktelement 38 ermöglicht. Die keramische Paste kann z.B. 4 bis 10 Gew.% Cerdioxid als eigentlicher Katalysator und 90 bis 96 Gew.% Yttrium-stabilisiertes Zirkoniumdioxid und Nickeloxid in einem Verhältnis von etwa 3:5 als Trägermaterial umfassen. Alternativ kann die Paste auch nur aus dem Katalysator, also z.B. Cerdioxid, bestehen.

Die Anode 34 kann z.B. aus einer Mischung von Yttrium-stabilisiertem Zirkoniumdioxid (YSZ) und Nickeloxid gebildet sein, und das anodische Kontaktelement 38 ist z.B. ein Nickelnetz.

Alternativ zu dem in Figur 2 gezeigten Ausführungsbeispiel kann das katalytisch aktive Material auch das anodenseitige Kontaktelement selbst bilden oder eine Beschichtung des anodenseitigen Kontaktelements.

Eine konkreter Vergleich der Leistungsfähigkeiten eines erfindungsgemäßen Brennstoffzellensystems mit einem Brennstoffzellensystems gemäß dem Stand der Technik wurde anhand des folgenden Beispielsystems durchgeführt:

| | |
|---|---|
| Brennstoffzellentyp: | SOFC |
| Brenngas: | Reformat aus Dieselkraftstoff mit ca. 9 ppm Schwefel |
| Betriebstemperatur: | 750 °C |
| Anodenmaterial: | NiO/YSZ |
| Anod. Kontaktelement: | Ni-Netz |

Als erfindungsgemäßes katalytisch aktives Material wurde eine keramische Paste aus Cerdioxid (CeO₂) zwischen dem Anodenmaterial und dem anodenseitigen Kontaktelement mittels Rollcoating aufgetragen, und zwar in einer Menge zwischen 0,012 und 0,024 g/cm². Ein Vergleichssystem wurde unter denselben Bedingungen ohne diese Paste betrieben.

Nach einer Betriebsdauer von 40 h kam es bei dem Vergleichssystem zu einem Abfall der anfänglichen Nennleistung um ca. 50%, und es fand keine Umsetzung von Kohlenmonoxid mehr statt (gleiche CO-Konzentration im Abgas wie im Brenngas gemäß GC-Messung).

Bei dem erfindungsgemäßen System fiel die Nennleistung nach derselben Betriebsdauer (40 h) nur um ca. 25% ab und blieb dann auf diesem Niveau stabil. Kohlenmonoxid wurde bis zum Ende der Messung (100 h) weiterhin umgesetzt, was belegt, dass trotz des Schwefelgehaltes im Brenngas die Shift-Reaktion durch das erfindungsgemäße katalytisch aktive Material weiterhin katalysiert wird.

Eine noch höhere Leistungsfähigkeit des erfindungsgemäßen Brennstoffzellensystems wurde erzielt, wenn als katalytisch aktives Material eine Paste verwendet wurde, die eine Mischung aus dotiertem Cerdioxid und Nickeloxid enthielt. Eine solche Paste umfasst z.B. 33 Gew.% nanoskaliges CeO₂ (mit Gd dotiert), 33 Gew.% nanoskaliges NiO, ca. 30 bis 32 Gew.% Terpineol als Lösungsmittel und ca. 2 bis 4 Gew.% Ethylcellulose als Bindemittel.

## Patentansprüche

1. Brennstoffzellensystem (10), umfassend einen Brennstoffzellenstapel (12) mit einer Mehrzahl von Kathoden (30) und Anoden (34), dem kathodenseitig (26) ein Sauerstoff enthaltendes Oxidatorgas und anodenseitig (22) ein Brenngas zuführbar ist, und einen Reformer (14) zur Erzeugung des Brenngases aus einem Brennstoff, wobei der Brennstoffzellenstapel (12) ein katalytisch aktives Material (42) umfasst, welches in den anodenseitigen Bereichen jeweils so angeordnet ist, dass es von dem Brenngas stromaufwärts der Anode (34) durchströmbar ist, wobei das katalytisch aktive Material (42) die Reaktion von Kohlenmonoxid und Wasser zu Kohlendioxid und Wasserstoff katalysiert,
**dadurch gekennzeichnet, dass** das katalytisch aktive Material (42) eine Mischung aus Cerdioxid, welches dotiert sein kann, und Nickeloxid umfasst, bevorzugt im Verhältnis von etwa 1:1.

2. Brennstoffzellensystem (10) nach Anspruch 1, wobei das katalytisch aktive Material (42) zwischen der Anode (34) und einem anodenseitigen Kontaktelement (38) angeordnet ist.

3. Brennstoffzellensystem (10) nach Anspruch 2, wobei das anodenseitige Kontaktelement (38) ein Netz, Geflecht oder Gewebe aus Nickel oder einer nickelhaltigen Legierung umfasst.

4. Brennstoffzellensystem (10) nach einem der vorangehenden Ansprüche, wobei das katalytisch aktive Material (42) in Form einer keramischen Paste vorliegt, oder wobei das katalytisch aktive Material (42) ein anodenseitiges Kontaktelement (38) oder eine Beschichtung auf einem anodenseitigen Kontaktelement (38) bildet.

5. Brennstoffzellensystem (10) nach Anspruch 4, wobei das katalytisch aktive Material (42) einen porösen keramischen Festkörper als anodenseitiges Kontaktelement (38) bildet, und wobei das katalytisch aktive Material (42) bevorzugt mittels eines nasschemischen Verfahrens, CVD, PVD oder galvanisch als Beschichtung auf das anodenseitige Kontaktelement (38) aufgebracht ist.

6. Brennstoffzellensystem (10) nach einem der vorhergehenden Ansprüche, wobei das in dem katalytisch aktiven Material (42) enthaltene Cerdioxid dotiert ist, insbesondere mit Gadolinium, Yttrium, Zirkonium und/oder Calcium.

7. Brennstoffzellensystem (10) nach einem der vorhergehenden Ansprüche, wobei das katalytisch aktive Material (42) ferner ein oder mehrere Trägermaterialien umfasst, die bevorzugt ausgewählt sind aus Zirkoniumdioxid, Yttrium-stabilisiertem Zirkoniumdioxid, Nickeloxid, Titandioxid, Aluminiumoxid, Magnesiumoxid, Zeolithen, Hexaaluminaten und Perowskiten, welche dotiert sein können.

8. Brennstoffzellensystem (10) nach einem der vorhergehenden Ansprüche, wobei die Mischung aus Cerdioxid und Nickeloxid mit einem Anteil von 1 bis 15 Gew.%, insbesondere von 4 bis 10 Gew.%, in dem katalytisch aktiven Material enthalten sind.

9. Brennstoffzellensystem (10) nach einem der vorangehenden Ansprüche, wobei in dem Reformer (14) eine Dampfreformierung, autotherme Reformierung oder partielle Oxidation abläuft, und wobei das Brenngas Wasserstoff und Kohlenmonoxid enthält.

10. Brennstoffzellensystem (10) nach einem der vorangehenden Ansprüche, wobei der Brennstoff ein Gemisch von aliphatischen und/oder aromatischen Kohlenwasserstoffen umfasst, und insbesondere ausgewählt ist aus Dieselkraftstoff und Motorbenzin.

11. Brennstoffzellensystem (10) nach Anspruch 10, wobei der Brennstoff einen Schwefelgehalt von bis zu 15 ppm aufweist, insbesondere von bis zu 10 ppm.

12. Verwendung eines Brennstoffzellensystems nach einem der vorangehenden Ansprüche zur Erzeugung von elektrischer Energie in einem Kraftfahrzeug, das einen mit dem Brennstoff betriebenen Verbrennungsmotor umfasst.

## Claims

1. Fuel cell system (10), comprising a fuel cell stack (12) with a plurality of cathodes (30) and anodes (34), wherein an oxidising gas containing oxygen is feedable to the stack on the cathode side (26) and a fuel gas is feedable to the stack on the anode side (22), and a reformer (14) for generating the fuel gas from a fuel, wherein the fuel cell stack (12) comprises a catalytically active material (42) which is arranged in the anode-side regions such that the fuel gas flows through the material upstream of the anode (34), said catalytically active material (42) catalysing the reaction of carbon monoxide and water to carbon dioxide and hydrogen,
**characterized in that** the catalytically active material (42) comprises a mixture of cerium dioxide, which can be doped, and nickel oxide, preferably in the ratio of approximately 1:1.

2. Fuel cell system (10) according to claim 1, wherein the catalytically active material (42) is arranged between the anode (34) and an anode-side contact element (38).

3. Fuel cell system (10) according to claim 2, wherein the anode-side contact element (38) comprises a mesh, braid or woven fabric of nickel or a nickel-containing alloy.

4. Fuel cell system (10) according to one of the preceding claims, wherein the catalytically active material (42) is present in the form of a ceramic paste, or wherein the catalytically active material (42) forms an anode-side contact element (38) or a coating on an anode-side contact element (38).

5. Fuel cell system (10) according to claim 4, wherein the catalytically active material (42) forms a porous ceramic solid body as the anode-side contact element (38), and wherein the catalytically active material (42) preferably is applied by means of a wet chemical process, CVD, PVD or by electroplating as a coating onto the anode-side contact element (38).

6. Fuel cell system (10) according to one of the preceding claims, wherein the cerium dioxide contained in the catalytically active material (42) is doped, particularly with gadolinium, yttrium, zirconium and/or calcium.

7. Fuel cell system (10) according to one of the preceding claims, wherein the catalytically active material (42) further comprises one or more carrier materials that are preferably selected from zirconium dioxide, yttrium-stabilised zirconium dioxide, nickel oxide, titanium dioxide, aluminium oxide, magnesium oxide, zeolites, hexaaluminates and perovskites, which can be doped.

8. Fuel cell system (10) according to one of the preceding claims, wherein the mixture of cerium dioxide and nickel oxide is contained in the catalytically active material in a proportion from 1% to 15% by weight, in particular from 4% to 10% by weight.

9. Fuel cell system (10) according to one of the preceding claims, wherein in the reformer (14), a steam reforming process, autothermal reforming or partial oxidation takes place, and wherein the fuel gas contains hydrogen and carbon monoxide.

10. Fuel cell system (10) according to one of the preceding claims, wherein the fuel comprises a mixture of aliphatic and/or aromatic hydrocarbons, and is selected, in particular, from diesel fuel and petrol.

11. Fuel cell system (10) according to claim 10, wherein the fuel has a sulphur content of up to 15 ppm and particularly up to 10 ppm.

12. Use of a fuel cell system according to one of the preceding claims for generating electrical energy in a motor vehicle which comprises an internal combustion engine powered by the fuel.

## Revendications

1. Système de piles à combustible (10), comprenant un empilement de piles à combustible (12) pourvu d'une multitude de cathodes (30) et d'anodes (34), auquel un gaz oxydant contenant de l'oxygène peut être amené côté cathode (26) et un gaz combustible peut être amené côté anode (22), et un reformeur (14) pour produire le gaz de combustion à partir d'un combustible, dans lequel l'empilement de piles à combustible (12) comprend un matériau catalytiquement actif (42), qui est disposé dans les zones situées côté anode respectivement de telle sorte qu'il peut être traversé par le gaz combustible en amont de l'anode (34), dans lequel le matériau catalytiquement actif (42) catalyse la réaction du monoxyde de carbone et de l'eau en dioxyde de carbone et en hydrogène,
**caractérisé en ce que** le matériau catalytiquement actif (42) comprend un mélange de dioxyde de cérium, qui peut être dopé, et d'oxyde de nickel, de préférence selon le rapport d'environ 1:1.

2. Système de piles à combustible (10) selon la revendication 1, dans lequel le matériau catalytiquement actif (42) est disposé entre l'anode (34) et un élément de contact (38) situé côté anode.

3. Système de piles à combustible (10) selon la revendication 2, dans lequel l'élément de contact (38) situé côté anode comprend un filet, un treillis ou un tissé composé de nickel ou d'un alliage contenant du nickel.

4. Système de piles à combustible (10) selon l'une quelconque des revendications précédentes, dans lequel le matériau catalytiquement actif (42) est présent sous la forme d'une pâte céramique, ou dans lequel le matériau catalytiquement actif (42) forme un élément de contact (38) situé côté anode ou un revêtement sur un élément de contact (38) situé côté anode.

5. Système de piles à combustible (10) selon la revendication 4, dans lequel le matériau catalytiquement actif (42) forme en tant qu'élément de contact (38) situé côté anode un corps solide poreux en céramique, et dans lequel le matériau catalytiquement actif (42) est appliqué de manière préférée au moyen d'un procédé chimique en milieu humide, d'un procédé de dépôt chimique en phase vapeur (CVD), d'un procédé de dépôt physique en phase vapeur (PVD) ou de manière galvanique, en tant que revêtement, sur l'élément de contact (38) situé côté anode.

6. Système de piles à combustible (10) selon l'une quelconque des revendications précédentes, dans lequel le dioxyde de cérium contenu dans le matériau catalytiquement actif (42) est dopé, en particulier avec du gadolinium, de l'yttrium, du zirconium et/ou du calcium.

7. Système de piles à combustible (10) selon l'une quelconque des revendications précédentes, dans lequel le matériau catalytiquement actif (42) comprend en outre un ou plusieurs matériaux de support, qui sont choisis de manière préférée parmi le dioxyde de zirconium, le dioxyde de zirconium stabilisé à l'yttrium, l'oxyde de nickel, le dioxyde de titane, l'oxyde d'aluminium, l'oxyde de magnésium, les zéolithes, les hexa-aluminates et les pérovskites, qui peuvent être dopés.

8. Système de piles à combustible (10) selon l'une quelconque des revendications précédentes, dans lequel le mélange composé de dioxyde de cérium et d'oxyde de nickel est contenu dans le matériau catalytiquement actif en une fraction allant de 1 à 15 % en poids, en particulier allant de 4 à 10 % en poids.

9. Système de piles à combustible (10) selon l'une quelconque des revendications précédentes, dans lequel un reformage à la vapeur, un reformage autotherme ou une oxydation partielle se déroulent dans le reformeur (14), et dans lequel le gaz combustible contient de l'hydrogène et du monoxyde de carbone.

10. Système de piles à combustible (10) selon l'une quelconque des revendications précédentes, dans lequel le combustible comprend un mélange d'hydrocarbures aliphatiques et/ou aromatiques, et est choisi en particulier parmi le gazole et l'essence.

11. Système de piles à combustible (10) selon la revendication 10, dans lequel le combustible présente une teneur en soufre pouvant aller jusqu'à 15 ppm, en particulier jusqu'à 10 ppm.

12. Utilisation d'un système de piles à combustible selon l'une quelconque des revendications précédentes pour produire une énergie électrique dans un véhicule à moteur, qui comprend un moteur à combustion interne fonctionnant avec le combustible.
